# EUROPÄISCHE PATENTSCHRIFT

(11) **EP 3 913 826 B1**
(45) Veröffentlichungstag und Bekanntmachung des Hinweises auf die Patenterteilung: **01.05.2024**
(21) Anmeldenummer: 21172948.8
(22) Anmeldetag: 10.05.2021
(51) Int. Cl.: H04K 3/00

(54) **SYSTEM ZUR DROHNENABWEHR**
SYSTEM FOR DEFENDING AGAINST DRONES
SYSTÈME DESTINÉ À LA LUTTE ANTIDRONES

(30) Priorität: 19.05.2020 DE 102020113564
(43) Veröffentlichungstag der Anmeldung: 24.11.2021
(73) Patentinhaber: Chmielus, Thorsten, 54597 Strickscheid (DE)
(72) Erfinder: Chmielus, Thorsten, 54597 Strickscheid (DE)
(74) Vertreter: Schmidt, Steffen

(56) Entgegenhaltungen:
- WO-A1-2012/095080
- WO-A1-2019/023831
- GB-A- 2 536 043
- US-A1- 2011 223 851
- US-A1- 2015 229 434
- JAN MIETZNER ET AL: "Responsive communications jamming against radio-controlled improvised explosive devices", IEEE COMMUNICATIONS MAGAZINE, IEEE SERVICE CENTER, PISCATAWAY, US, Bd. 50, Nr. 10, Oktober 2012 (2012-10), Seiten 38-46, XP011466347, ISSN: 0163-6804, DOI: 10.1109/MCOM.2012.6316774

## Beschreibung

Die vorliegende Erfindung betrifft ein System zur Drohnenabwehr und insbesondere einen Störsender, auch Jammer genannt, welcher ein Steuersignal der Drohne stört.

Systeme zur Drohnenabwehr sind allgemein bekannt. Jammer werden eingesetzt, um die Steuersignale zwischen einem Sender und einer Drohne zu stören. Dadurch ist die Drohne zum Landen oder Umkehren gezwungen, je nachdem, wie die Drohne für den Fall einer Unterbrechung der Steuersignale programmiert ist. Ferner ist es im solchen System auch wünschenswert, die genaue Position der Drohne laufend zu detektieren und ggf. Steuersignale zu deren Auswertung abzufangen. Da sich jedoch nicht gleichzeitig ein Störsignal senden lässt und im selben Frequenzbereich die Drohne angepeilt werden kann bzw. die Steuersignale abgehört werden können, ist es bereits im Stand der Technik bekannt, die Störsignale zeitweise zu unterbrechen, um in diesem Zeitfenster eine Peilung oder Erkennung des Signalinhalts vorzunehmen. Ein entsprechendes System ist z.B. in der DE 10 2010 056 268 A1 und der WO 2012/095080 A1 beschrieben. Weitere Systeme zur Abwehr von ferngesteuerten Vorrichtungen sind in der US 2011/223851 A1 und Jan Mietzner et al.: "Responsive communications jamming against radio-controlled improvised explosive devices", IEEE COMMUNICATIONS MAGAZINE, IEEE SERVICE CENTER PISCATAWAY, US, Bd. 50, Nr. 10, 1. Oktober 2012, Seiten 38-46 offenbart.

Allerdings weisen derartige Systeme den Nachteil auf, dass der Peilsender und der Störsender technisch miteinander verbunden werden müssen, um aufeinander abgestimmt die Störung und die Funküberwachung vorzunehmen. Aufgabe der vorliegenden Erfindung ist es, ein System bereit zu stellen, welches in einfacher Weise die Überwachung der Steuersignale und gleichzeitig die Störung der Steuersignale für eine Drohne ermöglicht. Gelöst wird die Aufgabe durch ein System zur Drohnenabwehr nach Anspruch 1.

Eine Besonderheit des erfindungsgemäßen Systems zur Drohnenabwehr besteht darin, dass der Funkdetektor selbständig erkennt, wann der Jammer die Aussendung der Störsignale unterbricht, um in diesen Zeitfenstern das Steuersignal zu detektieren. Beispielsweise kann in diesen Zeitfenstern das Steuersignal ausgewertet werden, um die Position der Drohne festzustellen oder um den Inhalt des Steuersignals abzufangen. Der Jammer und der Funkdetektor sind zwar aufeinander abgestimmt, weil der Jammer dafür eingerichtet ist, das Störsignal für definierte Zeiträume zu unterbrechen, um dem Funkdetektor die Signaldetektion zu ermöglichen. Allerdings brauchen die Geräte nicht miteinander verbunden zu sein, um das Stören und das Detektieren der Steuersignale der Drohne vorzunehmen, weil der Funkdetektor selbständig erkennt, wann das Störsignal vom Jammer unterbrochen wird.

Gemäß einer bevorzugten Ausführungsform sind der Jammer und der Funkdetektor räumlich getrennt ohne drahtgebundene Verbindung angeordnet. Da der Funkdetektor die Zeitfenster der Unterbrechung des Störsignals selbständig erkennt, benötigt er überhaupt keine Verbindung mit dem Jammer, weder eine drahtgebundene noch eine drahtlose Verbindung. Ferner kann er räumlich getrennt zum Jammer angeordnet werden, was den Vorteil hat, dass der Funkdetektor mobil ausgebildet sein kann, um ihn näher zur Drohne zu bringen. Da die Leistungsaufnahme des Funkdetektors auch geringer als des Störsenders ist, kann der Störsender beispielsweise stationär angeordnet sein, während der Funkdetektor nur mit einem portablen Energiespeicher betrieben wird.

Gemäß einer bevorzugten Ausführungsform weist der Funkdetektor einen Funkpeilempfänger auf, welcher eingerichtet ist, um eine Position der Drohne und/oder eine Position eines Senders, welcher die Funksteuersignale zur Steuerung der Drohne aussendet, zu ermitteln. Diese Informationen sind zur Drohnenabwehr nützlich. Ferner kann auch vorgesehen sein, dass die Informationen über der Position der Drohne, vorzugsweise drahtlos, an den Jammer übermittelt wird damit der Jammer die Aussendung des Störsignals entsprechend der aktuellen Position der Drohne anpasst.

Gemäß einer bevorzugten Ausführungsform ist das Störsignal des Jammers dafür eingerichtet, ein Protokoll der Steuerdaten der detektierten Drohne zu übernehmen und geänderte Steuerdaten zum Umlenken der Drohne auszugeben. Die Informationen über das von der Drohne verwendete Steuersignal erhält der Jammer über den Funkdetektor, welcher dafür eingerichtet ist, die Steuerdaten der Drohne auszuwerten. Durch das Ändern der Steuerdaten lässt sich die Drohne vom Kurs abbringen und zur Landung zwingen oder aus einem Gefahrengebiet herauslenken. Der Funkdetektor kann auch dazu eingerichtet sein, entsprechende Antwortsignale der Drohne zu simulieren, so dass der Sender der ursprünglichen Steuersignale für die Drohne einen Response erhält, welcher ihm eine falsche Position der Drohne meldet. Auf diese Weise lässt sich vollständig die Steuerung der Drohne übernehmen und der Sender der Steuersignale hat keine Kontrolle mehr über die Drohne. Im Idealfall erfährt der Bediener an der Steuerung der Drohne nicht einmal, dass die Drohne in Wirklichkeit umgelenkt wird.

Gemäß einer weiteren bevorzugten Ausführungsform kann das Störsignal auch ein GPS-Spoofing umfassen. Dabei wird das GPS-Signal derart geändert, dass die Drohne bei ihrer Positionsbestimmung eine falsche Position ermittelt. Durch geeignetes Spoofing lässt sich daher die Drohne ebenfalls umlenken, ohne dass es notwendig ist, die Steuersignale selbst zu ändern. Da die Drohne subjektiv die falsche Position wahrnimmt, beinhalten auch etwaige Response-Daten, welche die Drohne an den Sender der Steuerdaten zurücksendet, die falsche Position. In diesem Fall kann vom Sender der Steuerdaten nicht festgestellt werden, dass die Drohne tatsächlich auf einen anderen Kurs umgelenkt worden ist.

Gemäß einer bevorzugten Ausführungsform weist das System mehrere der Funkdetektoren auf, welche eingerichtet sind, um durch eine Kreuzpeilung die Position der Drohne und/oder des Senders zu ermitteln. Durch eine Kreuzpeilung lässt sich die Position der Drohne oder des die Drohne steuernden Sensors besonders präzise ermitteln. Da die Funkdetektoren räumlich unabhängig von dem Jammer angeordnet werden können, ist in diesem System die Aufteilung der Funkdetektoren zur Kreuzpeilung besonders einfach zu realisieren.

Gemäß einer bevorzugten Ausführungsform umfasst das System mehrere der Jammer, die räumlich beabstandet angeordnet sind und/oder dazu eingerichtet sind, Störsignale in unterschiedliche Richtungen abzugeben. Beispielsweise kann eine Vielzahl von Jammern vorgesehen sein, um ein großes Gebiet zur Drohnenabwehr abdecken zu können. Der Funkdetektor kann hingegen mobil bewegt werden, um die Drohne präzise orten zu können. Alternativ oder zusätzlich können die Jammer auch eingerichtet sein, um Störsignale in unterschiedliche Richtungen abzugeben. Beispielsweise kann eine Vielzahl von festinstallierten Jammern angesteuert werden, um nur in bestimmten Bereichen eines auf Drohnen zu überwachenden Raums Störsignale auszusenden.

Gemäß einer bevorzugten Ausführungsform ist der Funkdetektor eingerichtet, um Informationen bzgl. der Position der Drohne und/oder bzgl. eines Frequenzbereichs des detektierten Steuersignals der Drohne an den Jammer zu übermitteln, vorzugsweise drahtlos zu übermitteln. In diese Ausführungsform wird die Information über die Drohne zur Nachsteuerung des Jammers verwendet. Der Jammer kann die räumliche Aussendung des Störsignals und/oder den Frequenzbereich, über den das Störsignal ausgesendet wird, entsprechend der detektierten Position bzw. der detektierten Frequenz des Steuersignals der Drohne anpassen. Diese Ausführungsform lässt sich insbesondere auch mit mehreren Jammern kombinieren. In einer bevorzugten Ausführungsform ist/sind einer oder mehrere Jammer dazu eingerichtet, das Störsignal an den Frequenzbereich des detektierten Steuersignals anzupassen, und/oder die räumliche Aussendung des Störsignals entsprechend der detektierten Position der Drohne anzupassen.

Weitere Merkmale und Vorteile der vorliegenden Erfindung werden aus der nachfolgenden Beschreibung, die in Verbindung mit den beigefügten Figuren gegeben wird, deutlich. In den Figuren ist Folgendes dargestellt:
- Figur 1: zeigt schematisch ein System zur Drohnenabwehr gemäß einer Ausführungsform der Erfindung.
- Figur 2: zeigt schematisch ein Störsignal des Jammers und ein am Funkdetektor empfangenes Steuersignal in einem System zur Drohnenabwehr gemäß der Erfindung.

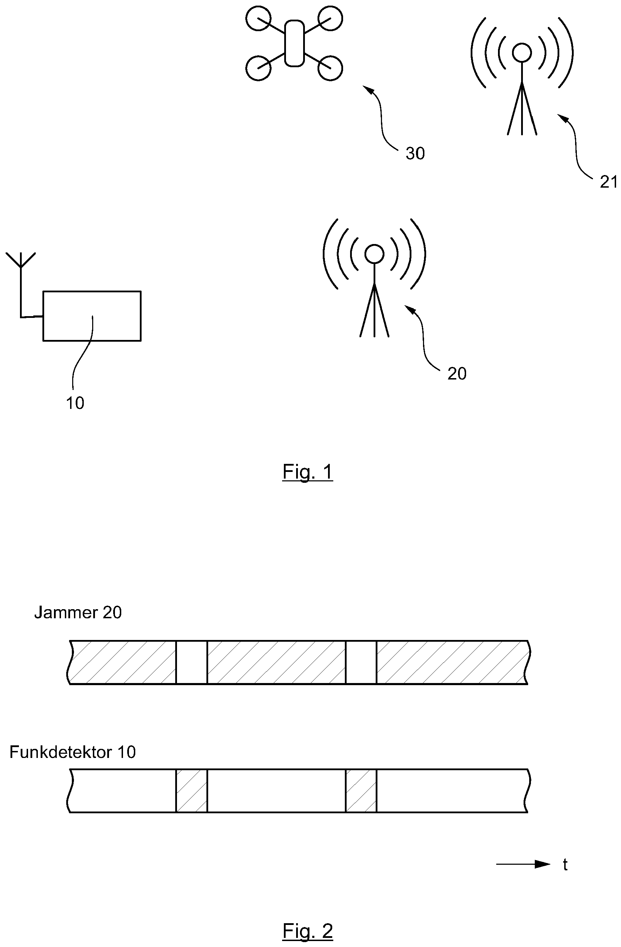

Bezugnehmend auf die Figur 1 wird ein System zur Drohnenabwehr beschrieben, welches einen Funkdetektor 10 und in dieser Ausführungsform zwei Jammer 20, 21 umfasst. Für Ausführungsformen der Erfindung genügt aber auch ein einzelner Jammer 20. Es können alternativ auch noch mehr Jammer und/oder Funkdetektoren vorhanden sein. Die Jammer sind dazu eingerichtet, ein Störsignal zu senden, welches eine Drohne 30 zum Umkehren oder Landen zwingt. Das Störsignal kann beispielsweise den Frequenzbereich eines Steuersignals der Drohne umfassen. Es kann auch ein GPS-Signal gestört werden, so dass die Drohne nicht mehr über einen weiteren Bereich gelenkt werden kann. Ferner ermöglicht das System die Position der Drohne zu ermitteln. Dazu ist im Funkdetektor 10 ein Funkpeilempfänger vorgesehen, welcher die Richtung und Entfernung der Drohne bestimmen kann. Alternative oder zusätzlich könne auch mehrere Funkdetektoren 10 vorgesehen sein, die beispielsweise durch eine Kreuzpeilung die Position der Drohne festlegen.

Da der Funkdetektor 10 jedoch nicht gleichzeitig auf derselben Frequenz arbeiten kann, wie das ausgesendet Störsignal der Jammer, ist vorgesehen, dass die Jammer die Aussendung des Störsignals zeitweise unterbrechen. Wie in Figur 2 dargestellt ist, kann ein Jammer über die Zeit ein Störsignal aussenden (schraffierter Bereich im oberen Balken) und zeitweise, z.B. in Zeitfenster zwischen 1 µs und 10 ms, die Aussendung des Störsignals unterbrechen.

Das Störsignal des Senders kann in einer Ausführungsform einfach das Steuersignal auf demselben Frequenzband überlagern, so dass die Drohne kein Steuersignal mehr empfängt. Gemäß weiteren Ausführungsformen ist es aber auch möglich, die Drohne durch Übernahme des Protokolls der Steuerdaten gezielt mit falschen Sendedaten zu versorgen, um die Drohne umzulenken oder zur Landung zu zwingen. Ferner ist es auch möglich, durch Verändern der GPS-Daten (sogenanntes Spoofing) der Drohne eine falsche Position vorzuspielen, so dass die Drohne, welche ihren Flugweg gemäß dem GPS-Empfang festlegt, auf einen falschen Kurs gezwungen wird. Dabei kann vom Sender der Steuersignal nicht einmal festgestellt werden, dass die Drohne umgelenkt worden ist, weil Response-Daten von der Drohne an den Sender der Steuerdaten auch die falschen Positionsdaten enthalten.

Der Funkdetektor 10 ist dazu eingerichtet, das Störsignal zu empfangen und die Unterbrechungen des Störsignals zu ermitteln. In den Zeitfenstern, in denen das Störsignal vom Jammer 20 unterbrochen wird, kann der Funkdetektor das Steuersignal der Drohne detektieren, um beispielsweise dir Peilung der Drohne vorzunehmen oder den Inhalt des Steuersignals zu erfassen. Ferner kann der Funkdetektor 10 auch ermitteln, ob sich das Steuersignal verändert. Diese Information kann ggf. an einen oder mehrere Jammer 20, 21 weitergeleitet werden, vorzugsweise drahtlos, um den oder die Jammer entsprechend nachzuregeln, so dass das Störsignal dem geänderten Steuersignal angepasst wird.

Die Unterbrechung des Störsignals können nur wenige µs, z.B. weniger als 20 µs, betragen, da die verhältnismäßig kurzen Pausen ausreichen, um die Peilung der Drohne durch den Funkdetektor 10 vorzunehmen.

Die Unterbrechungen des Störsignals können auch in unregelmäßigen Abständen erfolgen, um zu verhindern, dass etwaige Drohnensteuersysteme voraussichtliche Unterbrechungen erkennen und die Unterbrechungen nutzen, um die Drohne nur in den Unterbrechungsphasen zu steuern. Der Funkdetektor muss die Länge der Unterbrechungen des Störsignals nicht von Anfang an kennen, weil er ohnehin selbständig, d.h. ohne direkte Verbindung zum Jammer, die Unterbrechung des Störsignals erkennt und zur Detektion des Steuersignals nutzt.

In Ausführungsformen, in welchen das Störsignal gezielt genutzt wird, um die Drohne umzulenken (z.B. Übernahme des Protokolls der Steuerdaten oder GPS-Spoofing) empfängt der Jammer vorzugsweise Daten von dem Funkdetektor, um die Steuerdaten bzw. GPS-Daten entsprechend der tatsächlichen Position der Drohne bzw. dem abgehörten Protokoll der Steuerdaten einzustellen. Trotzdem ist der Jammer vorzugsweise drahtlos mit dem Funkdetektor verbunden, so dass der Funkdetektor unabhängig von dem Jammer betrieben werden kann. In einfachen Ausführungsformen wäre es jedoch möglich, zwischen dem Jammer und dem Detektor ein drahtgebundene Verbindung vorzunehmen, jedoch nicht, um die Unterbrechung der Steuerdaten vorzunehmen, sondern nur um die von dem Funkdetektor empfangenen und abgehörten Steuersignale an den Jammer weiterzuleiten.

## Patentansprüche

1. System zur Drohnenabwehr, umfassend wenigstens einen Jammer (20) und wenigstens einen Funkdetektor (10),
wobei der Jammer dazu eingerichtet ist, ein Störsignal über einen Frequenzbereich zu senden, und
der Funkdetektor (10) dazu eingerichtet ist, ein Funksteuersignal einer Drohne (30) zu detektieren,
wobei der Frequenzbereich des Störsignals eine Trägerfrequenz des Funksteuersignals oder ein GPS-Signal umfasst,
wobei der Jammer (20) eingerichtet ist, das Störsignal zeitweise zu unterbrechen und der Funkdetektor eingerichtet ist, das Störsignal zu empfangen, ohne direkte Verbindung zum Jammer die Unterbrechungen des Störsignals selbständig zu detektieren und das Funksteuersignal der Drohne (30) innerhalb der Unterbrechungen des Störsignals zu detektieren.

2. System nach Anspruch 1, wobei der Jammer (20) und der Funkdetektor (10) räumlich getrennt ohne drahtgebundene Verbindung angeordnet sind.

3. System nach einem der vorhergehenden Ansprüche, wobei der Funkdetektor (10) einen Funkpeilempfänger aufweist, welcher eingerichtet ist, um eine Position der Drohne (30) und/oder eine Position eines Senders, welcher die Funksteuersignale zur Steuerung der Drohne (30) aussendet, zu ermitteln.

4. System nach einem der vorhergehenden Ansprüche, wobei das Störsignal des Jammers (20) ein Übernehmen eines Protokolls der Steuerdaten der Drohne umfasst, um die Drohne (30) umzulenken, wobei der Jammer (20) Informationen über das Protokoll der Steuerdaten von dem Funkdetektor (10), vorzugsweise drahtlos, empfängt.

5. System nach einem der vorhergehenden Ansprüche, wobei das Störsignal ein Spoofing des GPS-Signals umfasst, um eine von der Drohne (30) über GPS ermittelte Position zu verfälschen.

6. System nach einem der vorhergehenden Ansprüche, welches mehrere der Funkdetektoren (10) aufweist, welche eingerichtet sind, um durch eine Kreuzpeilung die Position der Drohne (30) und/oder des Senders zu ermitteln.

7. System nach einem der vorhergehenden Ansprüche, welches mehrere der Jammer (20, 21) umfasst, die räumlich beabstandet angeordnet sind und/oder dazu eingerichtet sind, Störsignale in unterschiedliche Richtungen abzugeben.

8. System nach einem der vorhergehenden Ansprüche, wobei der Funkdetektor (10) eingerichtet ist, Informationen bzgl. der Position der Drohne (30) und/oder bzgl. eines Frequenzbereichs des detektierten Steuersignals der Drohne (30) an den Jammer (20) zu übermitteln, vorzugsweise drahtlos zu übermitteln.

9. System nach einem der vorliegenden Ansprüche, wobei der Jammer (20), bei Rückbezug auf Anspruch 7 vorzugsweise mehrere Jammer (20, 21), dazu eingerichtet ist/sind, das Störsignal an den Frequenzbereich des detektierten Steuersignals anzupassen, und/oder eine räumliche Aussendung des Störsignals entsprechend der detektierten Position der Drohne (30) anzupassen.

## Claims

1. System for drone defense, comprising at least one jammer (20) and at least one radio detector (10),
wherein the jammer is configured to transmit an interference signal over a frequency range, and
the radio detector (10) is configured to detect a radio control signal of a drone (30),
wherein the frequency range of the interference signal comprises a carrier frequency of the radio control signal or a GPS signal,
wherein the jammer (20) is configured to intermittently interrupt the interference signal and the radio detector is configured to receive the interference signal, to independently detect the interruptions of the interference signal without direct connection to the jammer and to detect the radio control signal of the drone (30) within the interruptions of the interference signal.

2. System according to claim 1, wherein the jammer (20) and the radio detector (10) are spatially separated without a wired connection.

3. System according to one of the preceding claims, wherein the radio detector (10) comprises a radio beacon receiver which is configured to determine a position of the drone (30) and/or a position of a transmitter which transmits the radio control signals for controlling the drone (30).

4. System according to one of the preceding claims, wherein the interference signal of the jammer (20) comprises taking over a log of the control data of the drone in order to deflect the drone (30), wherein the jammer (20) receives information about the log of the control data from the radio detector (10), preferably wirelessly.

5. System according to one of the preceding claims, wherein the interference signal comprises a spoofing of the GPS signal in order to falsify a position determined by the drone (30) via GPS.

6. System according to one of the preceding claims, which comprises a plurality of the radio detectors (10) which are configured to determine the position of the drone (30) and/or of the transmitter by means of a cross-beacon.

7. System according to one of the preceding claims, which comprises a plurality of the jammers (20, 21) which are spatially spaced apart and/or are configured to emit interference signals in different directions.

8. System according to one of the preceding claims, wherein the radio detector (10) is configured to transmit information relating to the position of the drone (30) and/or relating to a frequency range of the detected control signal of the drone (30) to the jammer (20), preferably wirelessly.

9. System according to one of the present claims, wherein the jammer (20), with reference back to claim 7 preferably a plurality of jammers (20, 21), is/are configured to adapt the interference signal to the frequency range of the detected control signal and/or to adapt a spatial emission of the interference signal according to the detected position of the drone (30).

## Revendications

1. Système de défense anti-drones, comprenant au moins un brouilleur (20) et au moins un radiodétecteur (10),
dans lequel le brouilleur est conçu pour émettre un signal parasite sur une plage de fréquences et
le radiodétecteur (10) est conçu pour détecter un signal de commande radio d'un drone (30),
dans lequel la plage de fréquences du signal parasite comprend une fréquence porteuse du signal de commande radio ou signal GPS,
dans lequel le brouilleur (20) est conçu pour interrompre temporairement le signal parasite et le radiodétecteur est conçu pour recevoir le signal parasite, pour détecter automatiquement, sans liaison directe avec le brouilleur, les interruptions du signal parasite et pour détecter le signal de commande du drone (30) à l'intérieur des interruptions du signal parasite.

2. Système selon la revendication 1, dans lequel le brouilleur (20) et le radiodétecteur (10) sont séparés physiquement, sans liaison filaire.

3. Système selon l'une des revendications précédentes, dans lequel le radiodétecteur (10) comprend un radiogoniomètre qui est conçu pour déterminer une position du drone (30) et/ou une position d'un émetteur qui émet les signaux de commande radio pour le contrôle du drone (30).

4. Système selon l'une des revendications précédentes, dans lequel le signal parasite du brouilleur (20) comprend la prise en charge d'un protocole des données de commande du drone, afin de détourner le drone (30), dans lequel le brouilleur (20) reçoit des informations en provenance du détecteur (10) par l'intermédiaire du protocole de données de commande, de préférence sans fil.

5. Système selon l'une des revendications précédentes, dans lequel le signal parasite comprend un spoofing du signal GPS, afin de falsifier une position déterminée par le drone (30) par l'intermédiaire du GPS.

6. Système selon l'une des revendications précédentes, qui comprend plusieurs radiodétecteurs (10), qui sont conçus pour déterminer, à l'aide d'une triangulation, la position du drone (30) et/ou de l'émetteur.

7. Système selon l'une des revendications précédentes, qui comprend plusieurs brouilleurs (20, 21) qui sont distants les uns des autres et/ou qui sont conçus pour émettre des signaux parasites dans différentes directions.

8. Système selon l'une des revendications précédentes, dans lequel le radiodétecteur (10) est conçu pour transmettre des informations concernant la position du drone (30) et/ou concernant une plage de fréquences du signal de commande détecté du drone (30) au brouilleur (20), de préférence sans fil.

9. Système selon l'une des revendications précédentes, dans lequel le brouilleur (20), en référence à la revendication 7, de préférence plusieurs brouilleurs (20, 21), sont conçus pour adapter le signal parasite à la plage de fréquences du signal de commande détecté et/ou pour adapter une émission dans l'espace du signal parasite en fonction de la position détectée du drone (30).
